# EUROPÄISCHE PATENTSCHRIFT

(11) **EP 3 269 561 B1**
(45) Veröffentlichungstag und Bekanntmachung des Hinweises auf die Patenterteilung: **20.02.2019**
(21) Anmeldenummer: 17175604.2
(22) Anmeldetag: 13.06.2017
(51) Int. Cl.: B60C 9/00, D02G 3/48

(54) **VERSTÄRKUNGSLAGE FÜR EINEN FAHRZEUGLUFTREIFEN, VORZUGWEISE FÜR EINE GÜRTELBANDAGENLAGE EINES FAHRZEUGLUFTREIFENS**
REINFORCING LAYER FOR A PNEUMATIC TYRE, PARTICULARLY FOR A BELT ASSEMBLY OF A PNEUMATIC TYRE
COUCHE DE RENFORT POUR UN PNEU DE VÉHICULE, DE PRÉFÉRENCE POUR UNE COUCHE DE BANDAGE DE CEINTURE D'UN PNEU DE VÉHICULE

(30) Priorität: 11.07.2016 DE 102016212575
(43) Veröffentlichungstag der Anmeldung: 17.01.2018
(73) Patentinhaber: Continental Reifen Deutschland GmbH, 30165 Hannover (DE)
(72) Erfinder: Reese, Wolfgang, 31228 Peine (DE)
(74) Vertreter: Finger, Karsten

(56) Entgegenhaltungen:
- EP-A1- 2 865 541
- WO-A1-2015/074778
- US-A1- 2009 107 323

## Beschreibung

Die Erfindung betrifft eine Verstärkungslage für einen Fahrzeugluftreifen, vorzugsweise für eine Gürtelbandagenlage eines Fahrzeugluftreifens, wobei die Verstärkungslage textile Festigkeitsträger aus Polyamid 4.6 aufweist und wobei jeder Festigkeitsträger aus Polyamid 4.6 mit etwa dem gleichen lichten Abstand zu dem unmittelbar benachbarten Festigkeitsträger aus Polyamid 4.6 angeordnet ist. Die Erfindung betrifft ferner einen Fahrzeugluftreifen, welcher eine vorgenannte Verstärkungslage aufweist.

Eine derartige Verstärkungslage für einen Luftreifen ist aus der EP 2 865 541 A1 bekannt.

Weiterhin ist aus der WO 2014060822 A2ein Gewebe mit paarweise angeordneten Corden bekannt, wobei die Corde beispielsweise aus Polyamid 4.6 (PA 4.6) bestehen. Dieses Gewebe ist als Verstärkung in der Gürtelbandagenlage einsetzbar.

Weiterhin ist aus der US 2009/107323 A1 ein geflochtetes Seil aus PA 4.6 bekannt. Dieses Seil wird für Hebeanwendungen verwendet. Die feinheitsbezogene Festigkeit beträgt zwischen 1,5 und 3 N/tex nach ASTM D885-85 für ein aus PA4.6 hergestelltes Garn, was 1500-3000mN/tex entspricht.

Verstärkungslagen für Fahrzeugluftreifen und deren Festigkeitsträger sind dem Fachmann in Aufbau und Material in unterschiedlichsten Ausführungen bekannt.

Bei PKW-Luftreifen werden Garne oder Corde im Wulstbereich, als Karkassmaterial, für Gürtellagen und in der Gürtelbandagenlage eingesetzt. Die Garne oder Corde werden während der Herstellung der Reifen in eine Kautschukmischung eingebettet, um als gummierte Festigkeitsträgerlage im Reifen eingesetzt werden zu können.

Die Gürtelbandage dient bei Fahrzeugluftreifen und insbesondere beim Hochgeschwindigkeitseinsatz dazu, eine Erhebung des Reifens durch die im Fahrbetrieb auftretenden Fliehkräfte zu verhindern. Sie ist bei einem Fahrzeugluftreifen, welcher im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen, Profilrillen aufweisenden Laufstreifen und einen Gürtel, zwischen Gürtel und Laufstreifen angeordnet. Die Gürtelbandage kann ein- oder mehrlagig ausgebildet sein, deckt zumindest die Gürtelränder ab und enthält parallel und im Wesentlichen in Umfangsrichtung verlaufende Festigkeitsträger in Form von Corden, die in eine Kautschukmischung eingebettet sind. Die Gürtelbandage wird bei der Reifenherstellung in Form von Lagen, Streifen oder Einzelfestigkeitsträgern mit in eine unvulkanisierte Kautschukmischung eingebetteten Festigkeitsträgern aufgebracht, die auf den Gürtel gewickelt oder gespult werden. Die Festigkeitsträger werden für solche Lagen in Kautschuk eingebettet, indem beispielsweise eine Schar von im Wesentlichen parallel liegenden fadenförmigen Festigkeitsträgern, die in der Regel thermisch und/oder zur besseren Haftung am einbettenden Gummi in dem Fachmann bekannter Art mit einer Imprägnierung vorbehandelt sind, in Längsrichtung einen Kalander oder einen Extruder zur Ummantelung mit der Kautschukmischung durchlaufen. Oder aber es werden Festigkeitsträger verwendet, die klebrig imprägniert sind und ohne eine kalandrierte Haftmischung verarbeitet werden können. Bei der Bombage und der Vulkanisation des Reifens dehnt sich der Reifen in der Regel im Schulterbereich durch die Erhebung um bis zu 2 % und im Mittenbereich um bis zu 4 % im Vergleich zum unvulkanisierten Rohling, wenn dieser Rohling auf einer flachen Trommel gewickelt wird. Somit soll der Festigkeitsträger, welcher in der Gürtelbandage eingesetzt ist, vorteilhafterweise diese Erhebung erlauben, also anfangs mit geringerem Kraftaufwand gedehnt werden können, jedoch nach dieser Anfangsdehnung bis 4% für die Hochgeschwindigkeitstauglichkeit mit nur höherem Kraftaufwand gedehnt werden können. In einem Kraft-Dehnungsdiagramm soll der Festigkeitsträger demnach bis zu einer Dehnung von 4% einen flacheren Verlauf und anschließend einen steileren Verlauf aufweisen.
Die Gürtelbandage ist ein- oder mehrlagig ausgebildet, deckt die Gürtelränder ab und weist parallel und etwa in Umfangsrichtung verlaufende Festigkeitsträger in Form von in Gummi eingebetteten Corden auf. "Etwa in Umfangsrichtung" meint einen Winkel von 0° bis 5° in Bezug auf die Reifenumfangsrichtung.

In der Gürtelbandage von Fahrzeugluftreifen ist es heutzutage üblich, Festigkeitsträger aus Polyamid 6.6 (PA 6.6) einzusetzen. Ein Nachteil von PA 6.6 ist die geringe thermische Stabilität, d.h. ein Modulverlust bei höheren Temperaturen wie während des High Speeds (Hochgeschwindigkeit), so dass hierdurch die High Speed Performance nachteilig beeinflusst werden kann.
Nachteilig bei der Anordnung von paarigen Festigkeitsträgern wie in der WO 2014060822 A2 beschrieben, ist es, dass durch Fretting-Effekte, also durch Reibung der paarigen Corde untereinander, während des Betriebs des Reifens dessen Haltbarkeit herabgesetzt sein kann.
Der Erfindung liegt die Aufgabe zu Grunde, eine Verstärkungslage mit Festigkeitsträgern für einen Fahrzeugluftreifen, vorzugsweise für eine Gürtelbandagenlage eines Fahrzeugluftreifens, zur Verfügung zu stellen, durch welche die Haltbarkeit des Reifens sowie dessen High Speed-Performance verbessert ist.
Gelöst wird die Aufgabe erfindungsgemäß dadurch, dass der Festigkeitsträger eine feinheitsbezogene Festigkeit aufweist, welche bei einer Temperatur von 80°C und einer Dehnung von 4% in einem Bereich von 90 mN/tex bis 120 mN/tex liegt, wobei die feinheitsbezogene Festigkeit nach ASTM D885-16 ermittelt ist.

In der Verstärkungslage sind keine paarigen Festigkeitsträger, sondern ausschließlich voneinander beabstandete Festigkeitsträger angeordnet, so dass kein für die Haltbarkeit des Fahrzeugluftreifens nachteiliges Fretting auftreten kann. Zudem weisen die Festigkeitsträger aus PA4.6 einen vergleichsweise hohen Modul bei hohen Temperaturen im High Speed auf, so dass Vorteile in der High Speed Performance erreicht sind.
Zweckmäßig ist es, wenn der Festigkeitsträger ein aus wenigstens zwei verdrehten Multifilamentgarnen endverdrehter Cord ist, wobei alle Multifilamentgarne aus Polyamid 4.6 bestehen. Durch die Verdrehung des Multifilamentgarnes bzw. des Cordes ist eine verbesserte Ermüdungsbeständigkeit des Festigkeitsträgers im Vergleich zu unverdrehten Festigkeitsträgern erreicht.

Vorteilhaft ist es, wenn der Twistfaktor α eines jeden Multifilamentgarnes oder des Cordes in einem Bereich von 110 bis 160, vorzugsweise in einem Bereich von 120 bis 150 liegt, wobei α = Twist [t/m] · (Feinheit [tex]/ 1000)^{1/2}. Derartige Multifilamentgarne lassen sich einfach herstellen und eignen sich zur Verwendung als Festigkeitsträger in Fahrzeugluftreifen.

Zweckmäßig ist es, wenn der Cord aus 2 oder 3 endverdrehten Multifilamentgarnen besteht. Durch die Verdrehung des Cordes aus 2 oder 3 Multifilamentgarnen ist eine verbesserte Ermüdungsbeständigkeit erreicht.

Vorteilhaft ist es, wenn die Anzahl der Filamente im Multifilamentgarn pro tex in einem Bereich von 1,0 bis 2,0, bevorzugt in einem Bereich von 1,4 bis 1,6 liegt.

Vorteilhaft ist es, wenn der Festigkeitsträger eine feinheitsbezogene Festigkeit aufweist, welche bei einer Temperatur von 80°C und einer Dehnung von 4% in einem Bereich von 95 mN/tex bis 115 mN/tex, bevorzugt in einem Bereich von 100 mN/tex bis 110 mN/tex liegt, wobei die feinheitsbezogene Festigkeit nach ASTM D885-16 ermittelt ist. Durch den vergleichsweise hohen Modul bei 80°C sind Vorteile eines Fahrzeugluftreifens, welcher diese Verstärkungslage aufweist, in der High Speed-Performance erreicht.

Die Erfindung betrifft ebenfalls einen Fahrzeugluftreifen, welcher eine Verstärkungslage gemäß einer voranstehend ausgeführten Verstärkungslage aufweist. Diese Verstärkungslage ist eine Gürtelbandagenlage oder ein Wulstverstärker, wie ein Chipper oder ein Flipper.

Die nachfolgende Tabelle zeigt die vorteilhaften Eigenschaften von Corden aus PA 4.6 im Vergleich zu Corden aus PA 6.6 in Bezug auf den Modul bei 80°C:

| | | |
|---|---|---|
| Cordkonstruktion 470x2 | PA 4.6 | PA 6.6 |
| Twist [t/m] | 420 | 420 |
| LASE 4% bei 80°C [N] | 10,1 | 7,8 |
| LASE 4% bei 80°C [mN/tex] | 107 | 83 |

Die Kraft-Dehnungsdaten sind ermittelt nach ASTM D885-16.
LASE steht für Load At Spezific Elongation und meint hier in der Tabelle die
feinheitsbezogene Festigkeit bei einer Temperatur von 80°C und einer Dehnung von 4%.

Es ist ersichtlich, dass der PA 4.6-Cord eine um 29% höhere feinheitsbezogene Festigkeit bei 80°C aufweist als ein vergleichbarer Cord aus PA 6.6, wodurch Vorteile eines diesen PA 4.6-Cord in der Gürtelbandage aufweisenden Fahrzeugluftreifens im High Speed erreicht werden.

Ein PKW-Reifen kann beispielsweise eine Gürtelbandagenlage aus Corden des folgenden Aufbaus aufweisen:

| | |
|---|---|
| Variante A: | Konstruktion / Material: 470x2 / Polyamid 4.6 |
| | Endverdrehung: 420 t/m |
| | Dichte in der Gürtelbandagenlage: 130 epdm |
| Variante B: | Konstruktion / Material: 940x2 / Polyamid 4.6 |
| | Endverdrehung: 350 t/m |
| | Dichte in der Gürtelbandagenlage: 80 epdm |

Bei Corden, also bei Festigkeitsträgern mit zwei oder mehr Multifilamentgarnen, ist die Garndrehung gleich der Corddrehung, nur in entgegengesetzter Richtung.

## Patentansprüche

1. Verstärkungslage für einen Fahrzeugluftreifen, vorzugsweise für eine Gürtelbandagenlage eines Fahrzeugluftreifens, wobei die Verstärkungslage textile Festigkeitsträger aus Polyamid 4.6 aufweist und wobei jeder Festigkeitsträger aus Polyamid 4.6 mit etwa dem gleichen lichten Abstand zu dem unmittelbar benachbarten Festigkeitsträger aus Polyamid 4.6 angeordnet ist, **dadurch gekennzeichnet, dass** der Festigkeitsträger eine feinheitsbezogene Festigkeit aufweist, welche bei einer Temperatur von 80°C und einer Dehnung von 4% in einem Bereich von 90 mN/tex bis 120 mN/tex liegt, wobei die feinheitsbezogene Festigkeit nach ASTM D885-16 ermittelt ist.

2. Verstärkungslage nach Anspruch 1, **dadurch gekennzeichnet, dass** der Festigkeitsträger ein aus wenigstens zwei verdrehten Multifilamentgarnen endverdrehter Cord ist, wobei alle Multifilamentgarne aus Polyamid 4.6 bestehen.

3. Verstärkungslage nach Anspruch 2, **dadurch gekennzeichnet, dass** der Twistfaktor α eines jeden Multifilamentgarnes oder des Cordes in einem Bereich von 110 bis 160, vorzugsweise in einem Bereich von 120 bis 150 liegt, wobei α = Twist [t/m] · (Feinheit [tex]/ 1000)^{1/2}.

4. Verstärkungslage nach Anspruch 2 oder 3, **dadurch gekennzeichnet, dass** der Cord aus 2 oder 3 endverdrehten Multifilamentgarnen besteht.

5. Verstärkungslage nach einem oder mehreren der vorangehenden Ansprüche 2 bis 4, **dadurch gekennzeichnet, dass** die Anzahl der Filamente im Multifilamentgarn pro tex in einem Bereich von 1,0 bis 2,0, bevorzugt in einem Bereich von 1,4 bis 1,6 liegt.

6. Verstärkungslage nach einem oder mehreren der vorangehenden Ansprüche, **dadurch gekennzeichnet, dass** der Festigkeitsträger eine feinheitsbezogene Festigkeit aufweist, welche bei einer Temperatur von 80°C und einer Dehnung von 4% in einem Bereich von 95 mN/tex bis 115 mN/tex, bevorzugt in einem Bereich von 100 mN/tex bis 110 mN/tex liegt, wobei die feinheitsbezogene Festigkeit nach ASTM D885-16 ermittelt ist.

7. Fahrzeugluftreifen, **dadurch gekennzeichnet, dass** dieser eine Verstärkungslage gemäß zumindest einem der Ansprüche 1 bis 6 aufweist.

8. Fahrzeugluftreifen nach Anspruch 7, **dadurch gekennzeichnet, dass** die Verstärkungslage eine Gürtelbandagenlage oder ein Wulstverstärker, wie ein Chipper oder ein Flipper, ist.

## Claims

1. Reinforcement ply for a pneumatic vehicle tyre, preferably for a belt bandage ply of a pneumatic vehicle tyre, where the reinforcement ply has textile strengthening elements consisting of nylon-4,6, and where each strengthening element consisting of nylon-4,6 is arranged with about the same clear distance from the directly adjacent strengthening element of nylon-4,6, **characterized in that** the strengthening element has a fineness-based strength which, at a temperature of 80°C and an elongation of 4%, is within a range from 90 mN/tex to 120 mN/tex, where the fineness-based strength is determined to ASTM D885-16.

2. Reinforcement ply according to Claim 1, **characterized in that** the strengthening element is an end-twisted cord formed from at least two twisted multifilament yarns, where all multifilament yarns consist of nylon-4,6.

3. Reinforcement ply according to Claim 2, **characterized in that** the twist factor α of each multifilament yarn or of the cord is within a range from 110 to 160, preferably within a range from 120 to 150, where α = twist [t/m]. (fineness [tex]/1000)^{1/2}.

4. Reinforcement ply according to Claim 2 or 3, **characterized in that** the cord consists of 2 or 3 end-twisted multifilament yarns.

5. Reinforcement ply according to one or more of the preceding Claims 2 to 4, **characterized in that** the number of filaments in the multifilament yarn per tex is within a range from 1.0 to 2.0, preferably within a range from 1.4 to 1.6.

6. Reinforcement ply according to any of the preceding claims, **characterized in that** the strengthening element has a fineness-based strength which, at a temperature of 80°C and an elongation of 4%, is within a range from 95 mN/tex to 115 mN/tex, preferably within a range from 100 mN/tex to 110 mN/tex, where the fineness-based strength is determined to ASTM D885-16.

7. Pneumatic vehicle tyre, **characterized in that** it includes a reinforcement ply according to at least one of Claims 1 to 6.

8. Pneumatic vehicle tyre according to Claim 7, **characterized in that** the reinforcement ply is a belt bandage ply or a bead reinforcement, such as a chipper or a flipper.

## Revendications

1. Couche de renforcement pour un pneu de véhicule, de préférence pour une couche de bandage de ceinture d'un pneu de véhicule, la couche de renforcement comprenant un renfort textile en polyamide 4.6 et chaque renfort en polyamide 4.6 étant agencé approximativement à la même distance du renfort en polyamide 4.6 directement voisin, **caractérisée en ce que** le renfort présente une résistance relative au titre qui se situe, à une température de 80 °C et un allongement de 4 %, dans une plage allant de 90 mN/tex à 120 mN/tex, la résistance relative au titre étant déterminée selon ASTM D885-16.

2. Couche de renforcement selon la revendication 1, **caractérisée en ce que** le renfort est un câble vrillé aux extrémités constitué par au moins deux fils multifilamentaires vrillés, tous les fils multifilamentaires étant constitués par du polyamide 4.6.

3. Couche de renforcement selon la revendication 2, **caractérisée en ce que** le coefficient de torsion α de chaque fil multifilamentaire ou du câble se situe dans une plage allant de 110 à 160, de préférence dans une plage allant de 120 à 150, avec α = torsion [t/m]·(titre [tex]/1000)^{1/2}.

4. Couche de renforcement selon la revendication 2 ou 3, **caractérisée en ce que** le câble est constitué par 2 ou 3 fils multifilamentaires vrillés aux extrémités.

5. Couche de renforcement selon une ou plusieurs des revendications 2 à 4 précédentes, **caractérisée en ce que** le nombre de filaments dans le fil multifilamentaires par tex se situe dans une plage allant de 1,0 à 2,0, de préférence dans une plage allant de 1,4 à 1,6.

6. Couche de renforcement selon une ou plusieurs des revendications précédentes, **caractérisée en ce que** le renfort présente une résistance relative au titre qui se situe, à une température de 80 °C et à un allongement de 4 %, dans une plage allant de 95 mN/tex à 115 mN/tex, de préférence dans une plage allant de 100 mN/tex à 110 mN/tex, la résistance relative au titre étant déterminée selon ASTM D885-16.

7. Pneu de véhicule, **caractérisé en ce que** celui-ci comprend une couche de renforcement selon au moins l'une quelconque des revendications 1 à 6.

8. Pneu de véhicule selon la revendication 7, **caractérisé en ce que** la couche de renforcement est une couche de bandage de ceinture ou un renfort de talon, tel qu'une languette ou une bandelette support.
